# EUROPEAN PATENT SPECIFICATION

(11) **EP 1 457 309 B1**
(45) Date of publication and mention of the grant of the patent: **21.03.2007**
(21) Application number: 04100883.0
(22) Date of filing: 04.03.2004
(51) Int. Cl.: B29D 30/24, B29D 30/36

(54) **Radially expansible tire assembly drum and method for forming tires**
Radial aufweitbare Reifenaufbautrommel und Reifenaufbauverfahren
Tambour expensible d'enroulement des pneus et procédé de fabrication des pneus

(30) Priority: 14.03.2003 US 388773
(43) Date of publication of application: 15.09.2004
(73) Proprietor: THE GOODYEAR TIRE & RUBBER COMPANY, Akron, Ohio 44316-0001 (US)
(72) Inventor: Girard, Jean-Claude, Copley, Ohio 44321 (US); Delgado, Andres Ignacio, Medina, Ohio 44256 (US)
(74) Representative: Kutsch, Bernd

(56) References cited:
- WO-A-03/103935
- DE-A- 2 002 294
- GB-A- 1 524 369
- US-A- 3 560 302
- US-A- 3 767 509
- US-A- 3 833 445

## Description

### Field of the Invention

This invention relates to a method of building a tire carcass onto a toroidally expanded building drum core according to the preamble of claim 1 and to a tire building drum according to the preamble of claim 7.

### Background of the Invention

Historically, the pneumatic tire has been fabricated as laminated structure of generally toroidal shape having beads, a tread, a belt reinforcement and carcass. Each component is placed on a building drum and cut to length such that the ends of a component meet, or overlap, creating a splice.

In the first stage of assembly, the carcass would include one or more plies, and a pair of sidewalls, a pair of apexes, an inner liner (for a tubeless tire), a pair of chafers and perhaps a pair of gum shoulder strips. Annular bead cores can be added during the first stage of tire building, and the ply or plies can be turned around the bead cores to form the "ply turnups."

Typically, the carcass components (excluding the bead cores) would be either "butt spliced" or "lap spliced." A butt splice has the component ends joined, but not overlapped. A lap splice has overlapping ends.

This intermediate article of manufacture can be cylindrically formed at this point in the first stage of assembly. The cylindrical carcass is expanded into a toroidal shape after completion of the first-stage of tire building. Reinforcing belts and the tread are added to the intermediate article during a second stage of tire manufacture, which can occur using the same building drum or work station or at a separate shaping station.

During the expansion of the carcass, tensile stresses are imposed on the spliced and uncured components of the tire carcass.

In the case of automobile or light truck tires, lap splices were preferred because the splice remained intact, whereas butt splices would tend to open or fail. Even with the good adhesion of the lap splice, the cords adjacent the splice tended to be stretched compensating for the overlapped two layers of cords at the splice. This localized stretching creates a non-uniformity that is readily visible under x-ray, ultrasonic display or by physically cutting the tire and visually inspecting it.

The tire designer, in order to prevent the creation of tire uniformity problems, has historically insured that the splices of various layers of components were not circumferentially aligned. This non-alignment of splice joints was believed to improve the carcass overall durability and uniformity, as measured by the amount of force variation and the balance of the tire. Tire engineers also have believed that tire uniformity could be improved if these discontinuities were deliberately circumferentially spaced around the carcass. This meant that each component had to be applied to the ply at the tire building station where each component was cut and spliced in a spaced order.

When the cord reinforced plies are placed on the building drum, it is very important that the geometric spacing of the beads and the ply turnups are controlled uniformly. Variations in the overall tire building process can result in variations in cord tension. These non-uniformities can affect the ride and handling characteristics of the tire.

In US-A- 6,250,356, a tire assembly drum is disclosed wherein the beads are two distinct sizes. The two distinct diameters on a tire exacerbate the problems of tire building and the disclosed assembly drum provides a method and apparatus to permit the tire to be built in a more uniform and faster way. This building drum was designed to build tires having a given set of two different diameters at the first stage of assembly. A separate tire-shaping drum was used to toroidally shape the tire carcass to assemble the tread and belt reinforcements and that drum is disclosed in US-A- 6,234,227.

US-A- 3,833,445 discloses a method and a tire building drum according to the preamble of claims 1 and 7 respectively. Further reference is made to US-A-3,560,302, US-A- 3,767,509, GB-A- 1,524,369, WO 03/10 3935 and DE-A- 20 02 294 disclosing various similar methods and tire building drums.

The present invention has the objective of providing a building drum that is radially expansible and capable of building tires toroidally while the sides are rigidly supported. In one embodiment, the building drum further has the objective of having axially movable ends, which can permit the assembled carcass to be built and shaped toroidially, avoiding removal of the carcass from the assembly drum for a second stage of tire building wherein the tread and reinforcing belt structure can be applied at the building drum.

### Summary of the Invention

A method of building a tire carcass onto a toroidally expanded building drum core according to claim 1 and a tire building drum according to claim 7 are disclosed.

Particular embodiments of the invention are the subject of the dependent claims.

The method of building a tire carcass onto a toroidally expanded building drum core employs the steps of: expanding the cover radially by an amount less than 5% greater than the first diameter D₁ and applying a belt reinforcing structure or a tread and belt reinforcing structure onto the expanded cover to form an uncured tire assembly and may further include the step of curing the uncured tire assembly in a tire curing mold and removing the cured tire assembly from the mold; collapsing the toroidally expanded building drum core.

The method of building a tire carcass onto a toroidally expanded building drum core has the step of collapsing the radially expanded core including the steps of axially increasing the spacing between the rigidly supported sides and radially lowering the internal side support mechanisms.

The step of lowering the internal side support mechanisms includes the steps of pivotally moving hinged elements of the internal side support mechanisms radially and axially inwardly.

The above method is best performed by a tire building drum rotatable about an axis of rotation.

The tire building drum has a pair of annular axially movable end supports; a pair of collapsible annular sidewall supports, an expandable reinforced annular cover, a means for rotating the tire building drum and a means for axially moving the annular axially movable end supports.

The pair of collapsible annular sidewall supports has a support attached pivotably to each axially movable end support. Each collapsible annular sidewall support has a plurality of pivotably movable hinged elements. The plurality of hinged elements when extended radially forms a collapsible annular sidewall support.

The expandable reinforced annular cover traverses across and extends over each collapsible sidewall support.

### Definitions

"Carcass" means an unvulcanized laminate of tire ply material and other tire components cut to length suitable for splicing, or already spliced, into a cylindrical or toroidal shape. Additional components may be added to the carcass prior to its being vulcanized to create the molded tire.

"Casing" means the tire carcass and associated tire components excluding the tread.

"Circumferential" means lines or directions extending along the perimeter of the surface of the annular tread perpendicular to the axial direction.

"Ply" means a continuous layer of rubber-coated parallel cords.

### Brief Description of the Drawings

The invention will be described by way of example and with reference to the accompanying drawings in which:
FIG. 1 is a plan view of the radially expansible drum assembly according to the present invention shown in combination with a robotic mechanism for applying ply cords;
FIG. 2 is a perspective view of the radially expansible drum assembly illustrating the drum core assembly shown in a closed position with the expandable cover removed for clarity of the internal mechanisms;
FIG. 3 is a second perspective view of the drum core assembly partially expanded illustrating the initial movement of the internal mechanism;
FIG. 4 is a third perspective view of the drum core assembly, it being understood that the inboard sidewall support assembly is identical to the outboard sidewall support assembly with the exception of being turned or facing in the opposite direction. In this view the collapsible annular sidewall supports are shown fully extended open;
FIG. 5 is a perspective view of the fully extended drum core assembly illustrating the expandable reinforced annular cover in the fully extended position;
FIG. 6 is a perspective view of the radially expansible drum core according to the present invention having the expandable reinforced annular cover stretched and in the fully collapsed position.

### Detailed Description of the Invention

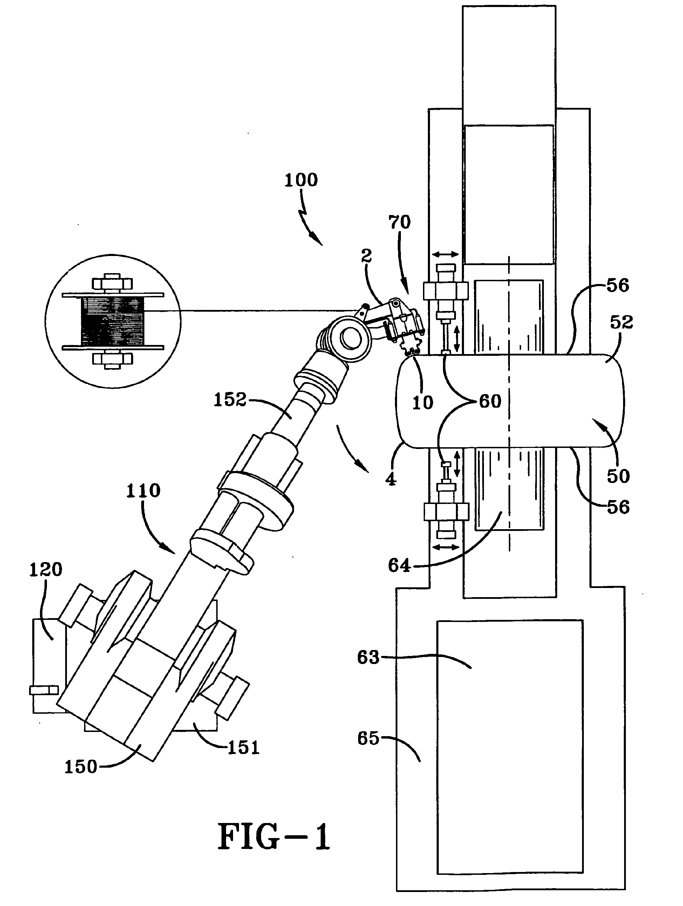

With reference to Fig. 1, a plan view of the tire building apparatus 100 of the present invention is illustrated. As shown, the apparatus 100 has a guide means which has, in addition to the ply mechanism 70, a robotic computer controlled system 110 for placing the cord 2 into the toroidally expanded surface of a building drum 50. A means for applying an elastomeric layer 4 onto the expanded cover 52 is provided which can include a server mechanism to feed strips of the layer 4 to the expanded cover 52.

The robotic computer controlled system 110 has a computer 120 and preprogrammed software which dictates the ply path 10 to be used for a particular tire size. Each movement of the system 110 can be articulated with very precise movements.

The robot 150 which is mounted on a pedestal 151 has a robotic arm 152 which can be moved in preferably six axes. The manipulating arm 152 has the ply mechanism 70 attached as shown.

Loop end forming mechanisms 60 are positioned on each side 56 of the toroidally expanded cover 52. The robotic arm 152 feeds the ply cord 2 in predetermined paths 10 and the loop end forming mechanism 60 holds the cord 2 in place as a looped end is formed. Each time an end is formed the toroidally expanded cover 52 is rotated to index to the next pitch P and the adjacent ply path 10 around the toroidally expanded cover 52.

The movement of the ply mechanism 70 permits convex curvatures to be coupled to concave curvatures near the bead areas thus mimicking the as-molded shape of the tire. A means 63 for rotating the mandrel 52 about its axle 64 are all mounted to a rigid frame 65 as shown.

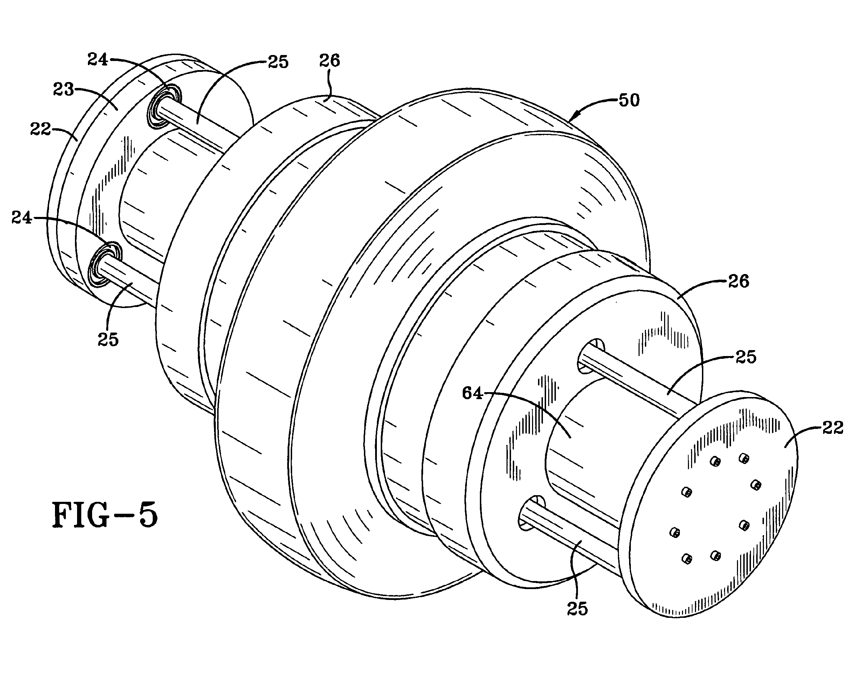

With reference to Figure 5, a perspective view of the toroidally expandable reinforced cover 52 of the present invention is shown. As illustrated, the radially inner portions on each side 56 of the toroidally expandable cover 52 have a concave curvature that extends radially outward toward the crown area of the toroidal mandrel 52. As the concave cross section extends radially outward toward the upper sidewall portion, the curvature transitions to a convex curvature in what is otherwise known as the crown area of the toroidally expandable cover 52. This cross section very closely duplicates the as-molded cross section of a tire.

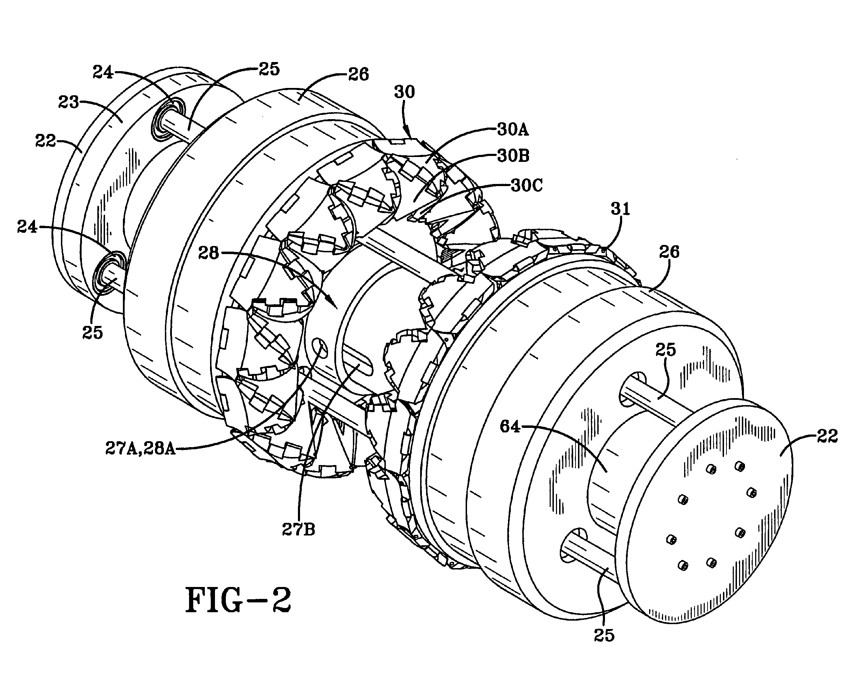

The entire drum core assembly 50 is shown in detail in Figures 2 through 6. In each of these figures the sequence of operation is shown from the perspective view of the drum core assembly 50.

With particular reference to Fig. 2 the drum core assembly 50 has a pair of end plates 22. These end plates provide attachment points for the entire drum core assembly to the tire building machine. The end plates 22 have four shafts connected to each plate. These shafts 25 extend throughout the drum core assembly and, as illustrated, various components are slidably attached to these shafts 25. For example, a disk 23 is shown at one end of the drum assembly. That disk has bearings 24 attached to each shaft. The disk is slidably movable along the shaft.

The drum core assembly 50 includes a pair of annular axially movable end supports 26. Attached to the end supports 26 is a pair of collapsible annular sidewall supports 30. A ring 28 is illustrated that is mounted over the axle 64. The ring has an opening 27A that provides for a cam follower 28A to ride in a slot 27B on the axle 64. This movement of the ring 28 provides axial movement inward and outward. The movement of the ring 28 is connected to the axially movable support ends 26 on each side of the drum assembly as illustrated. In Fig. 2 the drum assembly is shown without the reinforced annular cover 52 for better understanding of how the underlying mechanisms actually operate. As shown in Fig. 2, the collapsible annular side supports 30 are shown in the fully retracted or inward position. In this position the end supports 26 are axially spaced at their furthest distance apart.

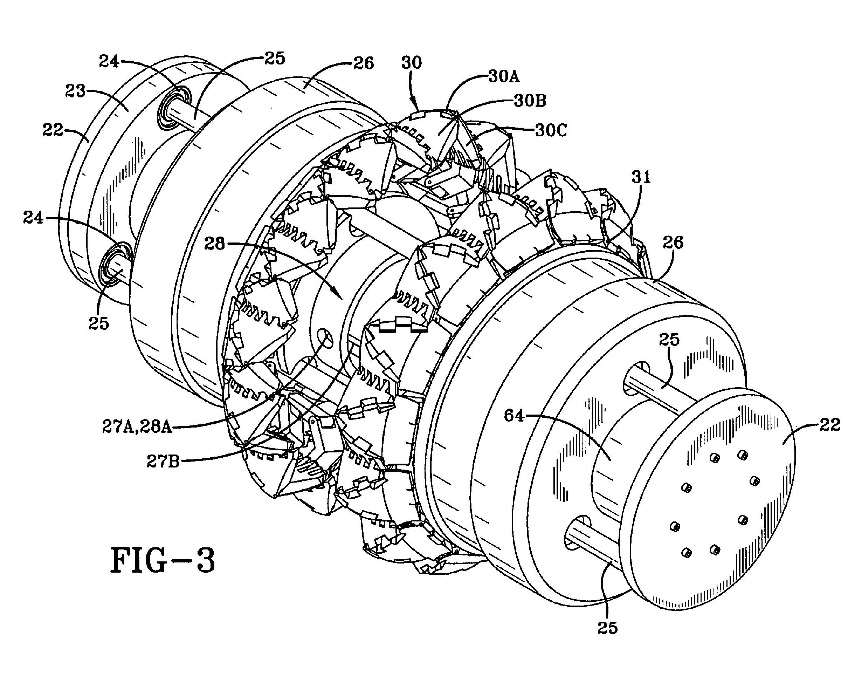

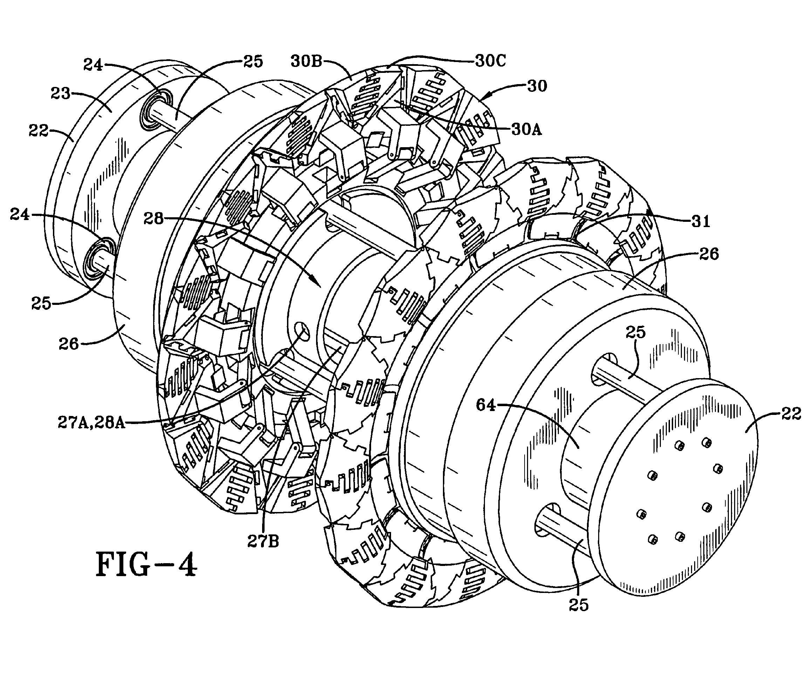

With reference to Figs. 3 and 4 the operation of the mechanism is now described. As the ends 26 are moved axially closer together the annular sidewall supports 30 start to move radially outwardly as the axial movement of the end supports 26 are brought closer together. As illustrated, the sidewall supports 20 include several hinged components 30A, 30B, 30C that are attached by pins 31. Each of these hinged components 30A, 30B, and 30C is capable of pivotally moving relative to the adjacent hinged component, As illustrated each of the hinged components 30A, 30B and 30C has a somewhat triangular shape and, in fact, have an arcuate curvature that will simulate the sidewall of the tire to be formed when in a fully opened or expanded radial position.

As illustrated in Fig. 3, the sidewall support mechanisms 30 start to raise from the fully collapsed position of Fig. 2 to the fully extended position of Fig. 4. As shown in Fig. 4 when the movement of the sidewall support mechanism 30 is completed the bead spacing is set for the appropriate tire being manufactured and the collapsible annular sidewall supports 30 are shown forming a complete annular ring as illustrated in Fig. 4, this annular ring provides a rigid support across the entire sides of the building drum. All this movement occurs in concert with the movement of the end supports 26 axially inwardly.

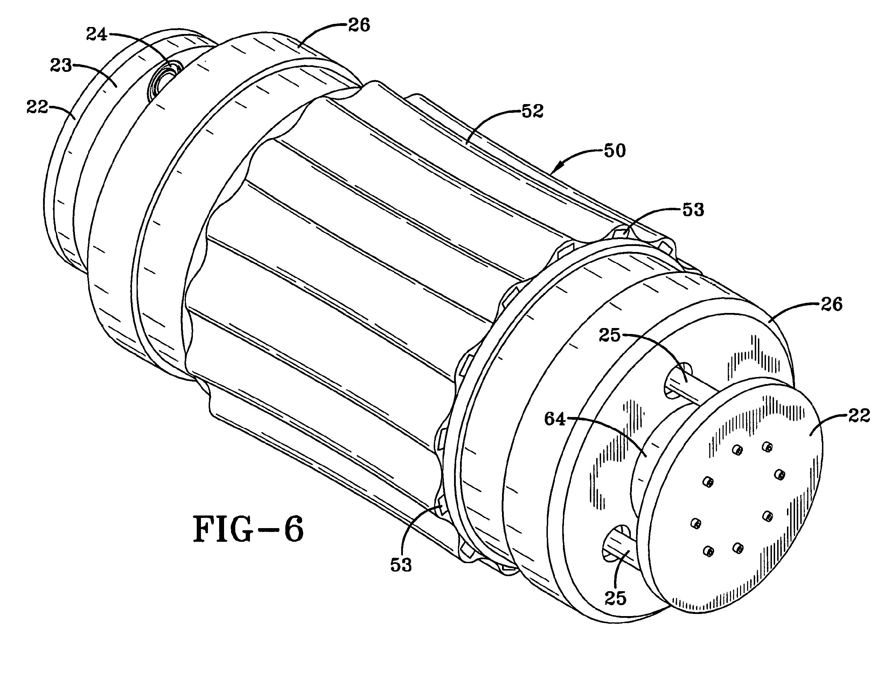

With reference to Fig. 5 the flexible reinforced annular cover 52 is illustrated over or covering the fully extended collapsible annular sidewall supports 30 illustrated in Fig. 4. In other words, the building drum assembly 50 as illustrated in Fig. 5 shows the position of the flexible member or cover 50 when the collapsible annular sidewall supports 30 are fully extended. This is the tire building mode. To remove the tire carcass from the drum assembly 50, one simply extends axially outward the two end supports 26. As the ends 26 move, the tire building drum 50 and the cover 52 are drawn radially inwardly as the end supports 26 move axially outwardly. In this position the collapsible sidewall supports 30 that are covered by the cover 52 are in the position shown in Fig. 3 and this is represented by the illustration shown in Fig. 6 wherein the cover 52 is concealing the collapsed annular sidewall supports 30.

The above tire building core permits the building of the tire carcass onto a toroidally expanded building drum assembly 50 by applying the carcass components onto a cover 52 of a toroidally expanded building drum core at a first diameter D₁ while rigidly supporting the sides 56 of the cover 52 with a pair of internal collapsible sidewall support mechanisms 30 to form the toroidally shaped uncured carcass. The reinforced expanded cover 52 can then be further expanded by an amount less than 5% greater than the diameter D₁ by applying an internal pressure to the expanded cover 52. This expanded cover 52 can then slightly grow in diameter at an amount less than 5% greater than the diameter D₁. After this additional growth in the cover 52 is achieved, one can simply add a belt reinforcing structure or tread belt reinforcing structure onto the expanded cover to form an uncured tire assembly which may further include the step of taking the entire uncured tire while mounted onto the drum assembly and placing that entire assembly into a tire curing mold and removing the cured tire assembly from the mold collapsing the toroidally expanded building drum core and removing the cured tire from the collapsed core. It is believed important that the uncured tire be assembled in a fashion that very closely approximate the curing dimensions. Having accomplished this, movements of the cords 2 and underlying reinforcing structures commonly found in tires can be greatly minimized. Once a tire is cured its cords are embedded into the cured rubber in such a fashion that they will not move. Current manufacturing of tires requires large amounts of expansion of the uncured rubber along with embedded reinforcing cords during various stages of the tire building. This is particularly true when tires are assembled on the flat cylindrical building drum and inflated into a toroidal shape. When this occurs, the reinforcing cords must stretch and expand as the movement radially outwardly is increased. The stretching movement of the cords changes the pitch and creates opportunities for non-uniformities to occur in the tire. By building the tire using the building drum 50 of the present invention the amount of stretch or change during tire building is greatly minimized. This ensures that the cords when placed onto the building drum remain in that position after cure or as close as possible to the as built condition once the tire is cured. It is an objective of the present invention to ensure that the cords are basically in almost the same position as they were applied before curing when the tire is finally cured. It is believed that the present invention provides a very efficient way to mold the tire in the as-built position without any distortion of the cords. As noted the overall tire building system is fully described in a related patent application Serial No. 10/365,374, filed February 11, 2003, entitled "An Improved Method and Apparatus For Manufacturing Carcass Plies For a Tire". That patent discloses how cords can be laid at various angles including radial to build radial type tires, on a bias to build bias-type tires or, alternatively, to build on any cord angle that is not included in the general species of radial or bias including, but not limited to, geodesic type ply cord angles. The present building drum 50 provides a maximum amount of efficiency to build the tire in a superior fashion to those of the known prior art. It is important that the sidewalls have the necessary curvatures to duplicate the as-finished tire. It is believed that this provides a far superior way of building a tire. It is further believed important that the sidewalls should be rigidly supported during the tire building process. This greatly facilitates locating the components in a very precise manner. Across the crown area of the tire it is very important that the expandable cover 52 also be rigidly supported. It is therefore recommended that the expandable cover 52 be made out of a material that can provide limited expansion under pressure but also provide a very rigid support across the top member. As a result it is recommended that the cover be reinforced with support members 53 of either plates, rods or other mechanisms to provide a somewhat rigid crown area so that the ply components can be added without movement in this area. With reference to Fig. 6, one can see that the sidewall support mechanisms 30 internal of the cover 50 provide sufficient sidewall support while the support members 53 provide radial support when the cover 52 is fully expanded. The support members 53 are shown extending transversely across the cover 52 and embedded therein. Alternatively, the support members 53 can be positioned on a bias. However, this creates more problems when one tries to collapse the sidewall supports 30 in a fully retracted position for removal of the built and finished tire.

## Claims

1. A method of building a tire carcass onto a toroidally expanded building drum core (50), wherein the method comprises applying carcass components onto a cover (52) of the toroidally expanded building drum core (50) at a first diameter while rigidly supporting the sides of the cover (52) with a pair of internal side support mechanisms (30) to form a toroidally shaped uncured carcass, **characterized in that** the method further comprises expanding the cover (52) radially by an amount less than 5% greater than the first diameter and applying a belt reinforcing structure or a tread and belt reinforcing structure onto the expanded cover (52) to form an uncured tire assembly.

2. The method of claim 1, wherein expanding the cover (52) radially by an amount less than 5% greater than the first diameter is done by applying an internal pressure to the cover (52).

3. The method of claim 1, further comprising the steps of curing the uncured tire assembly in a tire curing mold; removing the cured tire assembly from the mold; collapsing the toroidally expanded building drum core (50); and removing the tire from the collapsed core (50).

4. The method of claim 1, further comprising the steps of collapsing the radially expanded building drum core (50); and removing the formed uncured carcass from the collapsed building core (50).

5. The method of claim 4, wherein the step of collapsing the radially expanded core (50) includes the steps of axially increasing the spacing between the rigidly supported sides and radially lowering the internal side support mechanisms.

6. The method of claim 5, wherein the steps of lowering the internal side support mechanisms includes the steps of pivotally moving hinged elements of the internal side support mechanisms.

7. A tire building drum (50) rotatable about an axis of rotation (64) comprising:
a pair of annular axially movable end supports (26);
a pair of collapsible sidewall supports (30), one collapsible sidewall support (30) being pivotally attached to each axially movable end support (26), each sidewall having a plurality of pivotally movable hinged elements (30A, 30B, 30C), the plurality of hinged elements (30A, 30B, 30C) when extended radially form an annular sidewall support;
a reinforced annular cover (52), the cover traversing across and extending over each collapsible sidewall support (30);
a means for rotating the building drum (50); and
a means for axially moving the annular axially movable end supports (26);
**characterized in that** said reinforced annular cover (52) is expandable at a first diameter and that the reinforced annular cover (52) in its expanded condition is further expandable by an amount of less than 5% by means of applying an internal pressure to the expanded cover (52).

8. The tire building drum (50) of claim 7, wherein the pivotally movable hinged elements (30A, 30B, 30C) have a somewhat triangular shape.

## Patentansprüche

1. Verfahren zum Bau einer Reifenkarkasse auf einem ringförmig ausgedehnten Aufbautrommelkern (50), wobei das Verfahren ein Aufbringen von Karkassenbestandteilen auf einer Decke (52) des ringförmig aufgeweiteten Aufbautrommelkerns (50) mit einem ersten Durchmesser beinhaltet, während die Seiten der Decke (52) durch ein Paar interne Seitenstützmechanismen (30) fest gestützt werden, um eine ringförmig geformte unvulkanisierte Karkasse zu bilden, **dadurch gekennzeichnet, dass** das Verfahren weiter eine radiale Aufweitung der Decke (52) um einen Betrag, der weniger als 5% größer als der erste Durchmesser ist, beinhaltet sowie das Aufbringen einer Struktur zur Verstärkung des Gürtels oder des Profils und des Gürtels auf der aufgeweiteten Decke (52), um einen unvulkanisierten Reifenaufbau zu bilden.

2. Das Verfahren von Anspruch 1, wobei die Decke (52) radial um einen Betrag, der weniger als 5% größer als der erste Durchmesser ist, durch das Ausüben eines internen Drucks auf die Decke (52) aufgeweitet wird.

3. Das Verfahren von Anspruch 1, das zudem die Schritte der Vulkanisierung des unvulkanisierten Reifenaufbaus in einer Reifenvulkanisierungsform; der Entfernung des vulkanisierten Reifenaufbaus aus der Form; des Zusammenziehens des ringförmig aufgeweiteten Aufbautrommelkerns (50) und der Entfernung des Reifens von dem zusammengezogenen Kern (50) beinhaltet.

4. Das Verfahren von Anspruch 1, das zudem die Schritte des Zusammenziehens des radial ausgedehnten Aufbautrommelkerns (50) und der Entfernung der geformten unvulkanisierten Karkasse von dem zusammengezogenen Aufbaukern (50) beinhaltet.

5. Das Verfahren von Anspruch 4, wobei der Schritt des Zusammenziehens des radial aufgeweiteten Kerns (50) die Schritte der axialen Vergrößerung der Abstände zwischen den fest gestützten Seiten und der radialen Absenkung der internen Seitenstützmechanismen beinhaltet.

6. Das Verfahren von Anspruch 5, wobei die Schritte der Absenkung der internen Seitenstützmechanismen die Schritte des drehend Bewegens von klappbaren Elementen der internen Seitenstützmechanismen beinhalten.

7. Eine Reifenaufbautrommel (50), die sich um eine Rotationsachse (64) drehen lässt, aufweisend:
ein Paar axial beweglicher Endstützen (26);
ein Paar zusammenklappbarer Seitenstützen (30), eine zusammenklappbare Seitenwandstütze (30), die drehbar an jeder axial beweglichen Endstütze (26) befestigt ist, wobei jede Seitenwand eine Mehrzahl von drehbar beweglichen klappbaren Elementen (30A, 30B, 30C) besitzt, wobei diese Mehrzahl klappbarer Elemente (30A, 30B, 30C) eine ringförmige Seitenwandstütze bildet, wenn sie radial aufgeweitet werden;
eine verstärkte ringförmige Decke (52), wobei die Decke sich quer zu und über jede zusammenklappbare Seitenstütze (30) erstreckt;
ein Mittel zur Drehung der Aufbautrommel (50); und
ein Mittel zur axialen Bewegung der ringförmigen axial beweglichen Endstützen (26);
**dadurch gekennzeichnet, dass** besagte verstärkte ringförmige Decke (52) auf einen ersten Durchmesser aufweitbar ist, und dass die verstärkte ringförmige Decke (52) in ihrem aufgeweiteten Zustand durch die Anwendung eines internen Druckes auf die ausgedehnte Decke (52) um einen Betrag unter 5% weiter aufweitbar ist.

8. Die Reifenaufbautrommel (50) nach Anspruch 7, wobei die drehbar beweglichen klappbaren Elemente (30A, 30B, 30C) eine in etwa dreieckige Form aufweisen.

## Revendications

1. Procédé de confection d'une carcasse de bandage pneumatique sur une partie centrale de tambour de confection soumise à un élargissement de configuration toroïdale (50), dans lequel le procédé comprend le fait d'appliquer des composants de carcasse sur un recouvrement (52) de la partie centrale de tambour de confection soumise à un élargissement de configuration toroïdale (50) à un premier diamètre, tout en supportant de manière rigide les côtés du recouvrement (52) avec une paire de mécanismes de supports latéraux internes (30) pour former une carcasse non vulcanisée possédant une configuration toroïdale, **caractérisé en ce que** le procédé comprend en outre le fait d'élargir le recouvrement (52) en direction radiale d'une valeur supérieure au premier diamètre, à concurrence de moins de 5 %, et le fait d'appliquer une structure de renforcement de ceinture ou bien une structure de renforcement de bande de roulement et de ceinture sur le recouvrement à l'état élargi (52) pour former un assemblage de bandage pneumatique non vulcanisé.

2. Procédé selon la revendication 1, dans lequel l'élargissement du recouvrement (52) en direction radiale d'une valeur supérieure au premier diamètre, à concurrence de moins de 5 %, est mis en oeuvre en appliquant une pression interne sur le recouvrement (52).

3. Procédé selon la revendication 1, comprenant en outre les étapes consistant à : vulcaniser l'assemblage non vulcanisé dans un moule de vulcanisation de bandage pneumatique ; retirer du moule l'assemblage de bandage pneumatique à l'état vulcanisé ; affaisser la partie centrale de tambour de confection (50) soumise à un élargissement de configuration toroïdale ; et retirer le bandage pneumatique de la partie centrale affaissée (50).

4. Procédé selon la revendication 1, comprenant en outre les étapes consistant à : affaisser la partie centrale de tambour de confection (50) soumise à un élargissement en direction radiale ; et retirer la carcasse façonnée non vulcanisée de la partie centrale de confection affaissée (50).

5. Procédé selon la revendication 4, dans lequel l'étape consistant à affaisser la partie centrale (50) soumise à un élargissement en direction radiale englobe les étapes consistant à augmenter en direction radiale l'écartement entre les côtés supportés de manière rigide et à abaisser en direction radiale les mécanismes de supports latéraux internes.

6. Procédé selon la revendication 5, dans lequel l'étape consistant à abaisser les mécanismes de supports latéraux internes englobe l'étape consistant à soumettre à un déplacement par pivotement des éléments articulés des mécanismes de supports latéraux internes.

7. Tambour de confection de bandages pneumatiques (50) rotatif autour d'un axe de rotation (64), comprenant :
une paire de supports terminaux annulaires (26) mobiles en direction axiale ;
une paire de supports de flancs (30) aptes à s'affaisser, un support de flanc (30) apte à s'affaisser étant fixé en pivotement à chaque support terminal mobile en direction axiale (26), chaque flanc possédant plusieurs éléments articulés (30A, 30B, 30C) mobiles en pivotement, lesdits plusieurs éléments articulés (30A, 30B, 30C), lorsqu'ils sont étendus en direction radiale, formant un support de flanc annulaire ;
un recouvrement annulaire renforcé (52), le recouvrement s'étendant dans la direction transversale de chaque support de flanc (30) apte à s'affaisser et par-dessus chacun desdits supports ;
un moyen pour faire tourner le tambour de confection (50) ; et
un moyen pour déplacer en direction axiale les supports terminaux annulaires (26) mobiles en direction axiale ;
**caractérisé en ce que** ledit recouvrement annulaire renforcé (52) est à même de s'élargir pour prendre un premier diamètre et **en ce que** le recouvrement annulaire renforcé (52) à son état élargi, peut être soumis à un élargissement supplémentaire à concurrence d'une valeur inférieure à 5 % en appliquant une pression interne sur le recouvrement (52) à l'état élargi.

8. Tambour de confection de bandages pneumatiques (50) selon la revendication 7, dans lequel les éléments articulés (30A, 30B, 30C) mobiles par pivotement, possèdent une configuration approximativement triangulaire.
